## Europäisches Patentamt

## European Patent Office

## Office européen des brevets

(11) Veröffentlichungsnummer: **0 093 359**

**B1**

(12) **EUROPÄISCHE PATENTSCHRIFT**

(45) Veröffentlichungstag der Patentschrift:
23.07.86

(51) Int. Cl.⁴: **F 16 K 27/04,** F 15 B 13/042

(21) Anmeldenummer: **83104002.7**

(22) Anmeldetag: **23.04.83**

(54) **Wegeventil.**

(30) Priorität: **05.05.82 DE 3216705**

(43) Veröffentlichungstag der Anmeldung:
**09.11.83 Patentblatt 83/45**

(45) Bekanntmachung des Hinweises auf die Patenterteilung:
**23.07.86 Patentblatt 86/30**

(84) Benannte Vertragsstaaten:
**CH DE FR IT LI**

(56) Entgegenhaltungen:
**DE-A-1 917 598**
**DE-U-7 035 256**
**FR-A-2 257 837**
**FR-A-2 339 115**
**GB-A-1 152 472**

(73) Patentinhaber: **ROBERT BOSCH GMBH, Postfach 50, D-7000 Stuttgart 1 (DE)**

(72) Erfinder: **Schock, Manfred, Dipl.- Ing., Neuhalde 26, D-7140 Ludwigsburg (DE)**

LIBER, STOCKHOLM 1986

# Beschreibung

## Stand der Technik

Die Erfindung geht aus von einem Wegeventil für unterschiedliche Betriebsarten nach der Gattung des Hauptanspruchs.

Es ist schon ein solches Wegeventil aus der DE-A-1 917 598 bekannt, das zur Umstellung auf unterschiedliche Betriebsarten an den Gehäusestirnseiten umstellbare Deckel aufweist. In den Deckeln sind austauschbare Flachdichtungen sowie Abdeckplatten angeordnet, mit Hilfe derer unterschiedliche Steuerkanalverbindungen herstellbar sind. Obwohl sich hier auf der Steuerseite relativ große Kanalquerschnitte erzielen lassen, hat diese Bauart doch den Nachteil, daß die zur Stirnseite des Gehäuses geführten Steuerkanäle sehr lang werden und nur aufwendig herstellbar sind. Dies gilt besonders deswegen, weil das Gehäuse durch den zwischen Deckel und Steuerschieber liegenden Antriebskolben relativ lang baut. Nachteilig ist ferner, daß für unterschiedliche Betriebsarten unterschiedliche Flachdichtungen notwendig werden und daß solche Flachdichtungen relativ hohe Anpreßkräfte zur Herstellung dichter Steuerverbindungen benötigen. Zudem ist die Variationsmöglichkeit hier begrenzt, da unterschiedliche Betriebsarten nur durch Austausch der stirnseitigen Flachdichtungen erreichbar sind.

Ferner ist aus dem DE-U- 7 035 256 ein Steuerventil bekannt, das zur Umstellung auf verschiedene Betätigungsarten sowohl an den Stirnseiten als auch an einer Grundfläche austauschbare Dichtungen verwendet. Nachteilig hierbei ist, daß für zweierlei Betriebsarten auch unterschiedliche Dichtungen erforderlich sind. Zudem erfordern die dort verwendeten Flachdichtungen relativ hohe Anpreßkräfte zur Herstellung dichter Steuerleitungsverbindungen.

## Vorteile der Erfindung

Das erfindungsgemäße Wegeventil für unterschiedliche Betriebsarten mit den kennzeichnenden Merkmalen des Hauptanspruchs hat demgegenüber den Vorteil, daß es durch Verwendung einer vorgeformten Rundschnurdichtung trotz geringer Anpreßkräfte möglichst dichte Steuerleitungsverbindungen ermöglicht und die Umstellung von einer Eigenluftversorgung auf eine Fremdluftversorgung lediglich durch andere Montage der Rundschnurdichtung erreichbar ist. Für unterschiedliche Betriebsarten geeignete Wegeventile können somit aus gleichen Bauelementen hergestellt werden, die sich relativ einfach herstellen lassen.

Durch die in den Unteransprüchen aufgeführten Maßnahmen sind vorteilhafte Weiterbildungen und Verbesserungen des im Hauptanspruch angegebenen Wegeventils möglich. Weitere vorteilhafte Ausgestaltungen ergeben sich aus der Beschreibung und der Zeichnung.

## Zeichnung

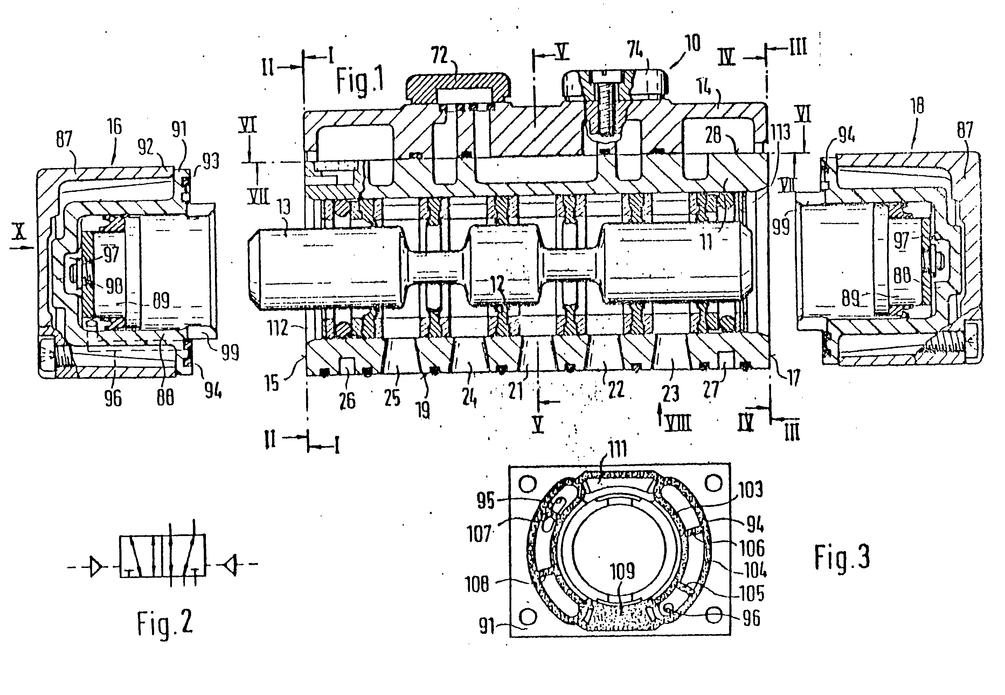

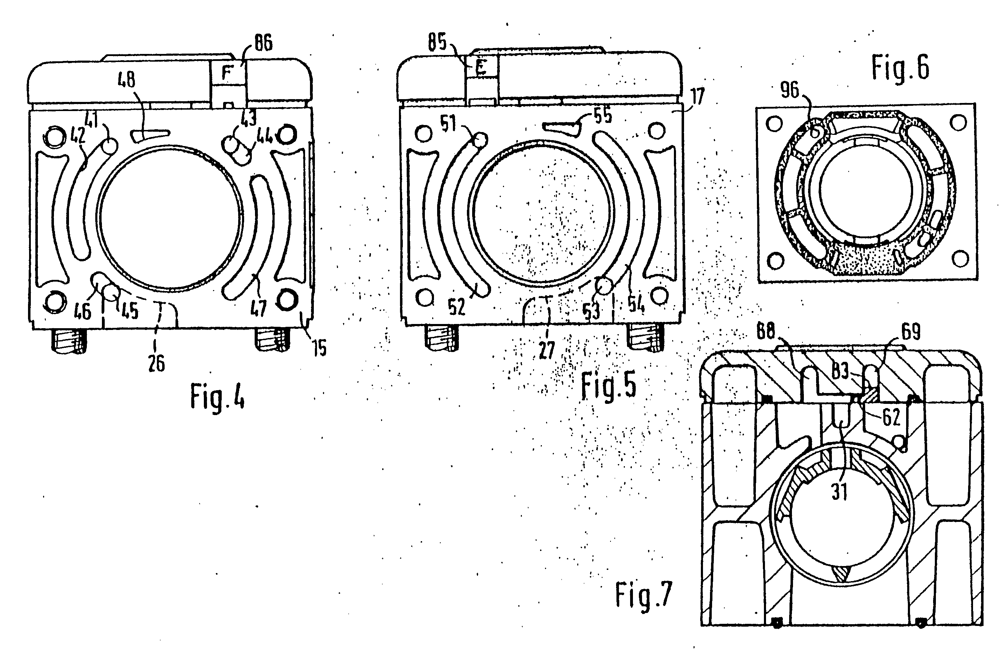

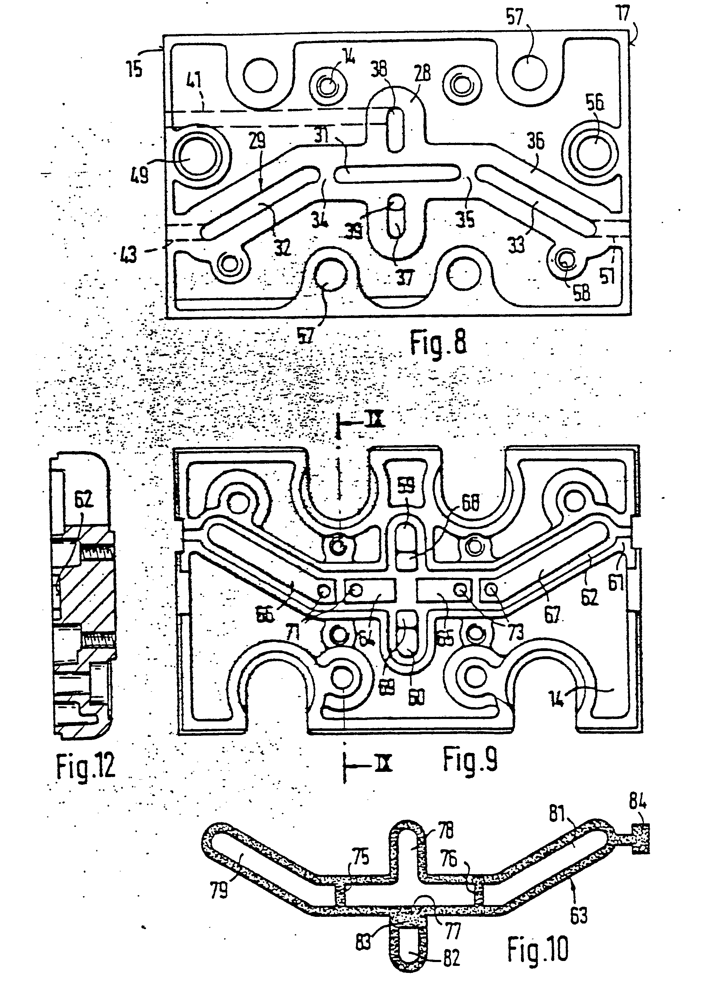

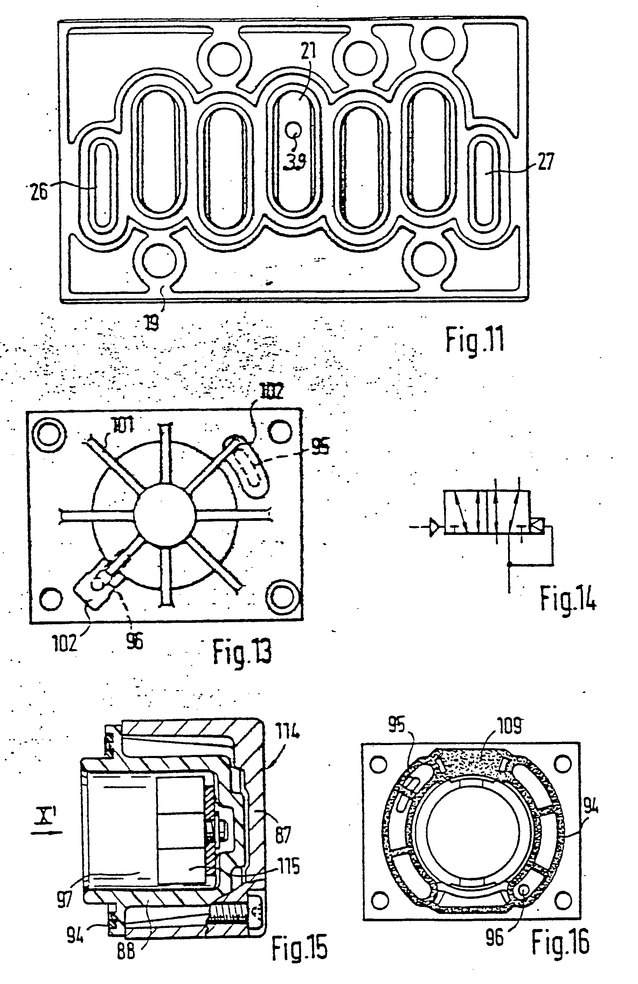

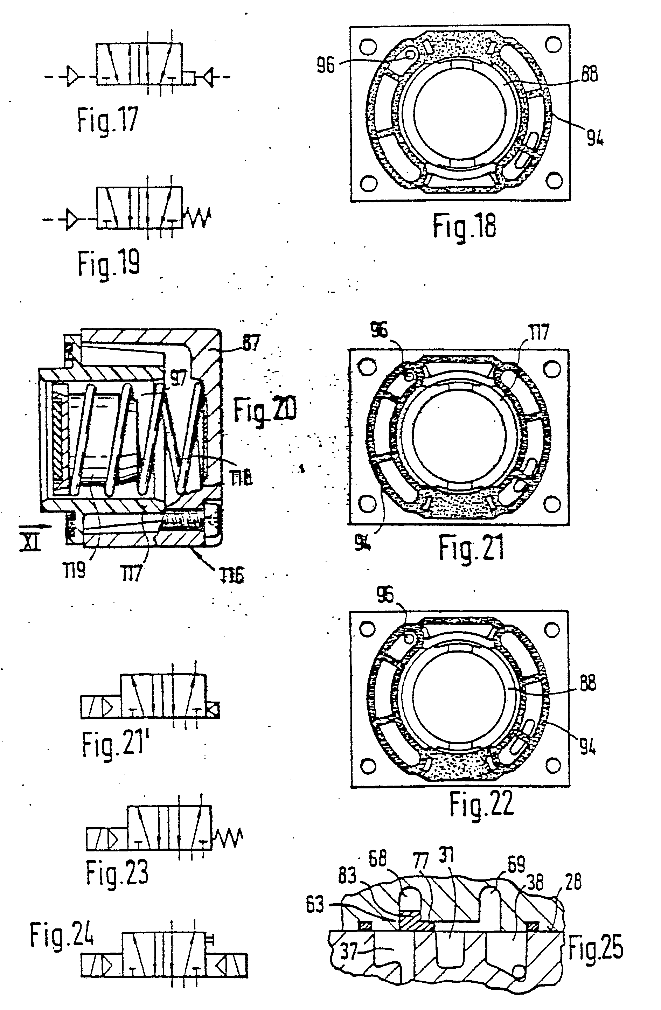

Ausführungsbeispiele der Erfindung sind in der Zeichnung dargestellt und in der nachfolgenden Beschreibung näher erläutert. Es zeigen Figur 1 einen Längsschnitt durch ein Wegeventil in einer Ausführung als Impulsventil mit gleich großen Kolbenflächen, Figur 2 das zugehörige Schaltsymbol des Wegeventiles nach Figur 1, Figur 3 einen Querschnitt nach I-I in Figur 1 mit in der Buchse eingelegter Rundschnurdichtung, Figur 4 einen Querschnittnach II-II in Figur 1, Figur 5 einen Querschnitt gemäß III-III in Figur 1, Figur 6 einen Querschnitt gemäß IV-IV in Figur 1, Figur 7 einen Querschnitt nach V-V in Figur 1, Figur 8 einen Schnitt gemäß VI-VI in Figur 1 und somit eine Draufsicht auf das Gehäuse des Wegeventiles in Figur 1, Figur 9 einen Schnitt gemäß VII-VII in Figur 1 und somit eine Untersicht auf eine Steuerplatte des Wegeventils nach Figur 1, Figur 10 eine Ansicht einer aus der Steuerplatte nach Figur 9 herausgenommenen Rundschnurdichtung, Figur 11 eine Untersicht des Gehäuses des Wegeventils nach Figur 1 gemäß Pfeil VIII, Figur 12 einen Querschnitt durch die Steuerplatte nach IX-IX in Figur 9, Figur 13 eine Ansicht der in den Deckel eingesetzten Kunststoff-Buchse nach Pfeil X in Figur 1, die Figur 14 zeigt das Schaltsymbol eines zweiten Wegeventiles, das als Umschaltventil mit Luftrückstellung ausgebildet ist, Figur 15 zeigt den dementsprechend geänderten, rechten Deckel im Längsschnitt und Figur 16 die Seitenansicht des Deckels nach Figur 15 in Richtung des Pfeiles X', die Figur 17 zeigt das Sinnbild eines dritten Wegeventiles, das als Impulsventil mit Differenzkolben ausgebildet ist und Figur 18 den zugehörigen Schnitt nach IV-IV, jedoch mit anderen und umgestellten Bauelementen, Figur 19 zeigt das Sinnbild eines vierten Wegeventiles, das als Umschaltventil mit Federrückstellung ausgebildet ist, Figur 20 den zugehörigen, rechten Deckel für Federrückstellung und Figur 21 den Deckel nach Figur 20 in Richtung des Pfeiles XI, die Figur 21 zeigt das Sinnbild eines fünften Wegewentils, das als Magnetventil mit Luftrückstellung ausgebildet ist und Figur 22 den zugehörigen Schnitt nach I-I in Figur 1, jedoch mit umgestellten Bauelementen, die Figur 23 zeigt das Sinnbild für ein sechstes Wegeventil, das als Magnetventil mit Federrückstellung ausgebildet ist und Figur 24 ein siebtes Wegeventil, das als Magnetimpulsventil ausgeführt ist, die Figur 25 zeigt einen Teilschnitt durch das Gehäuse mit angeflanschter Steuerplatte entsprechend Figur 7, jedoch mit verdrehter Montagelage der Rundschnurdichtung für externe Steuerluftversorgung.

## Beschreibung der Ausführungsbeispiele

Die Figur 1 zeigt ein Wegeventil 10 im Längsschnitt, das als Impulsventil mit gleichen Kolbenflächen ausgebildet ist. Das 5/2-Wegeventil hat ein Gehäuse 11, das in einer mehrteiligen Schieberbuchse 12 einen längsbeweglichen Steuerschieber 13 aufnimmt. Das Gehäuse 11 ist oben durch eine Steuerplatte 14, an seiner linken Stirnfläche 15 durch eine erste Deckeleinheit 16 und an seiner rechten Stirnfläche 17 durch eine zweite Deckeleinheit 18 verschlossen. Die Deckeleinheiten 16, 18 sind - zum besseren Verständnis - vom Gehäuse 11 getrennt gezeichnet. Das Gehäuse 11 weist an einer der Steuerplatte 14 entgegengesetzt liegenden Grundfläche 19 fünf Arbeitsanschlüsse für die Zuluft (21), für einen Verbraucher (22, 24) sowie für die Abluft (23, 25) und fernerhin einen ersten und einen zweiten Steueranschluß 26, 27 auf. Diese Anschlüsse 21 bis 27 sind entsprechend der ISO-Norm ausgebildet, wie dies Figur 11 näher zeigt.

In der von der Steuerplatte 14 abgedeckten Steuerfläche 28 des Gehäuses 11 verläuft von der linken Stirnfläche 15 zur rechten Stirnfläche 17 ein etwa U-förmiger Steuerkanal 29 (siehe Figur 8). Den Bodenabschnitt dieses U-förmigen Steuerkanals 29 bildet eine mittig liegende und parallel zur Längsachse des Steuerschiebers verlaufende Längsnut 31, an die sich nach außen hin die die Schenkel des U bildenden Schrägnuten 32 und 33 anschließen. Die die Schenkel bildenden Schrägnuten 32, 33 sind hierbei stark nach außen gebogen und durch Stege 34, 35 in einer Dichtungsfläche 36 von der Längsnut 31 getrennt. Ferner liegen in der Dichtungsebene 36 diametral zur Längsnut 31 und von dieser getrennt eine erste Quernut 37 sowie eine zweite Quernut 38. Von der ersten Quernut 37 führt eine Bohrung 39 zum Arbeitsanschluß 21 für die Zuluft. Von der zweiten Quernut 38 führt eine erste Längsbohrung 41 in die linke Stirnfläche 15 und mündet dort in eine erste Bogennut 42, die sich etwa über ein Fünftel des Kreisumfanges erstreckt, wie dies näher aus Figur 4 ersichtlich ist. Ferner führt vom Ende der ersten Schrägnut 32 eine zweite Längsbohrung 43 in eine zweite Bogennut 44 an der Stirnseite 15. Wie ferner aus Figur 4 ersichtlich ist, verbindet eine dritte Längsbohrung 45 den ersten Steueranschluß 26 mit einer dritten Bogennut 46 in derselben Stirnfläche 15. Außerdem verläuft in der linken Stirnfläche 15 diametral zur ersten Bogennut 42 eine vierte Bogennut 47, die wie die andren Bogennuten 42, 44, 46 auf demselben Durchmesser liegt. Zudem liegen alle drei Längsbohrungen 41, 43, 45 auf den Ecken eines Rechtecks und damit zugleich auf dem erwähnten Durchmesser. Im Bereich zwischen der ersten und der dritten Längsbohrung 41 bzw. 43 liegt auf demselben Durchmesser eine nierenförmige Öffnung 48, die mit einer Entlüftungs-Öffnung 49 in der Steuerfläche 28 in Verbindung steht, wie dies aus Figur 1 und 8 erkennbar ist. Sämtliche Bogennuten 42, 44, 46, 47 sowie die Öffnung 48 sind in der Stirnfläche 15 durch Materialstege voneinander getrennt.

Wie die Figur 8 in Verbindung mit der Figur 5 näher zeigt, führt von der zweiten Schrägnut 33 eine fünfte Längsbohrung 51 in die rechte Stirnfläche 17, wo sie in eine fünfte Bogennut 52 mündet. Die fünfte Längsbohrung 51 liegt koxial zur zweiten Längsbohrung 43. Vom zweiten Steueranschluß 27 führt in entsprechender Weise eine sechste Längsbohrung 53 in eine sechste Bogennut 54 in der Stirnfläche 17, wobei die sechte Längsbohrung 53 koaxial zur dritten Längsbohrungs 45 liegt. In der Stirnfläche 17 liegt zwischen den beiden Bogennuten 52 und 54 eine zweite nierenörmige Öffnung 55, die in entsprechender Weise mit einer Entlüftungs-Öffnung 56 in der Steuerebene 28 in Verbindung steht. In der zweiten Stirnfläche 17 liegen die Bogennuten 52, 54 sowie die Öffnung 55 auf deselben Durchmesser wie die Bogennuten an der anderen Stirnfläche 15, wobei die Längsbohrungen 51 und 52 sowie deren zugeordneten Bogennuten 52 bzw. 54 diametral zueinander angordnet sind. Die fünfte Bogennut 52 erstreckt sich über einen Umfangsabschnitt, in dem der linken Stirnfläche 15 die erste Bogennut 42 und die dritte Bogennut 46 zusammen verlaufen. Entsprechendes gilt für die sechste Bogennut 54. Wie die Figur 8 näher zeigt, liegen die Entlüftungs-Öffnungen 49 und 56 in derselben Längsebene im Gehäuse 11. In Figur 8 sind ferner vier Durchgangsbohrungen 57 für die Schrauben zum Befestigen des Ventils 10 auf einer nicht näher gezeichneten Grundplatte sowie vier Gewindelöcher 58 zum Festschrauben der Steuerplatte 14 erkennbar.

Die Figur 9 zeigt in Verbindung mit den Figuren 1, 7 und 12 näher die Bauweise der Steuerplatte 14. Dabei ist in Figur 9 in der als Druckgußteil ausgebildeten Steuerplatte 14 ein Materialsteg 61 erkennbar, dessen Form der Dichtungsfläche 36 am Gehäuse 11 angepaßt ist. In diesem Materialsteg 61 ist gegenüber der Steuerfläche 28 eine Aufnahmefläche 62 abgesetzt, in die eine vorgeformte Rundschnurdichtung 63 nach Figur 10 einlegbar ist. Im Bereich der Aufnahmefläche 62 sind insgesamt sechs Erhebungen 64, 65, 66, 67, 59, 60 sowie zwei Vertiefungen 68, 69 ausgebildet, deren Verlauf und Lage den Nuten 31, 32, 33, 37, 38 in der Dichtfläche 36 des Gehäuses 11 entsprechen. Die Erhebungen 64 bis 67, 59, 60 ragen bis in die Steuerebene 28 und sorgen für eine einwandfreie Kammerung der Rundschnurdichtung 63. So liegen eine erste (64) und eine zweite Erhebung 65 der Längsnut 31 gegenüber, die dritte Erhebung 66 der ersten Schrägnut 32 sowie die vierte Erhebung 67 der zweiten Schrägnut 33. Die erste Vertiefung 68 und die fünfte Erhebung 59 sind der ersten Quernut 37 und die zweite Vertiefung 69 mit der sechsten Erhebung 60 der zweiten Quernut 38 zugeordnet. Die erste (64) und die dritte Erhebung 66 sind über ein Bohrungspaar 71 und einen angeschraubten Kanaldeckel 72 miteinander verbindbar. Eine entsprechende Verbindung zwischen der zweiten (65) und der vierten Erhebung 67 ermöglicht ein Bohrungspaar 73 mit zugeordnetem Kanaldeckel 74.

Die Figur 10 zeigt die aus der Steuerplatte 14 herausgenommene, vorgeformte Rundschnurdichtung 63. Ihr Rundmaterial umschließt im wesentlichen die Form zweier sich mittig kreuzender Balken, wobei die Enden des längeren Querbalkens nach der gleichen Seite hin abgewinkelt sind entsprechend dem Verlauf der Schrägnuten 32 und 33 in dem Gehäuse 11. Zwei zueinander parallele Dichtschnurstege 75 und 76 sowie ein im Kreuzungspunkt der Balken liegender Längsschnursteg 77 trennen in der Rundschnurdichtung eine P-Kammer 78 von zwei äußeren, abgewinkelt liegenden Endkammern 79, 81 und von einer Querkammer 82. Ferner ist im Bereich der Querkammer 82 an dem Längsschnursteg 77 ein Sicherungsnoppen 83 (siehe Figur 7) angeformt, der in die zweite Vertiefung 69 der Steuerplatte 14 greift und dabei bei Druckbeaufschlagung ein Herausdrücken des Längsschnurstegs 77 verhindert. Ferner ist an der Rundschnurdichtung 63 an einem Ende des langen Balkens ein Anzeigenocken 84 angeformt, der im Bereich der Steuerfläche 28 zwischen Gehäuse 11 und Steuerplatte 14 herausragt und zusammen mit einer Marke 85 an der Steuerplatte 14 die Eigenluftversorgung für die Steuerseite anzeigt. Die Rundschnurdichtung 63 ist soweit symmetrisch ausgebildet, daß sie aus der in Figur 10 gezeigten Lage in der Zeichenebene um 180° gedreht und so in einer zweiten Montagelage in die Aufnahmefläche 62 der Steuerplatte 14 einsetzbar ist, wobei der Sicherungsnocken 83 in die Vertiefung 68 zu liegen kommt. Der Anzeigenocken 84 liegt in dieser zweiten Montagelage der Rundschnurdichtung 63 bei einer Marke 86 für Fremdluftversorgung, die in Figur 4 erkennbar ist. Da die gesamte Dichtung 63 aus Rundschnurmaterial besteht, können die nach einer Richtung vorgeformten, abgewinkelten Enden ohne weiteres in entgegengesetzter Richtung abgewinkelt werden und in die Aufnahmefläche 62 eingeführt werden.

Die am Gehäuse 11 an der linken Stirnfläche 15 angeflanschte, erste Deckeleinheit 16 wird anhand von Figur 1 und Figur 3 erläutert. Sie besteht im wesentlichen aus einen als Aluminium-Druckgußteil ausgebildeten, äußeren Deckel 87 der in seinem Innern eine als Kunststoffteil ausgebildete Buchse 88 aufnimmt, in welcher ein Antriebskolben 89 für den Steuerschieber 13 dicht und gleitend geführt ist. Die Buchse 88 ist im wesentlichen becherförmig ausgebildet und weist nahe ihrem offenen Ende einen Flansch 91 auf, auf dessen einer Seite sich der Deckel 87 mit seinem Rand 92 abstützt. Auf der anderen Seite des Flansches 91, die der Stirnfläche 15 des Gehäuses 11 zugewandt ist, sind Rillen 93 zur Aufnahme einer ringförmigen Rundschnurdichtung 94 eingeformt. Auf demselben Durchmesser wie die Bogennuten im Gehäuse 11 liegen in der Buchse 88 zur Rundschnurdichtung hin offen eine bogenförmige Nut 95 sowie die Öffnung eines Steuerkanals 96, wie dies aus Figur 3 und Figur 13 erkennbar ist. Die bogenförmige Nut 95 ist nach Lage und Größe so ausgebildet, daß sie abhängig von der Montagelage der Deckeleinheit 16 am Gehäuse 11 eine Verbindung zwischen der ersten (42) und der dritten Bogenut 46 oder aber eine Verbindung zwischen der zweiten Bogenut 44 und der vierten Bogennut 47 herstellen kann. Die Öffnung des Steuerkanals 96 liegt im Flansch 91 der Nut 95 im wesentlichen diametral gegenüber. Der Steuerkanal 96 mündet mit seinem von dem Flansch 91 entgegengesetzten Ende in einen Druckraum 97 der zwischen dem Antriebskolben 89 und einem Boden der becherförmig ausgebildeten Buchse 88 liegt. Ferner weist die Buchse 88 von ihrem offenen Ende bis in den Dichtungsbereich der Rundschnurdichtung 94 reichende Längsnuten 99 auf, welche zur Entlüftung der rückwärtigen Seite des Antriebskolbens 89 dienen. Wie aus Figur 1 und Figur 13 näher erkennbar ist, weist die becherförmige Buchse 88 außen radial verlaufende Versteifungsrippen 101 auf und hat im Bereich des Steuerkanals 96 und der bogenförmigen Nut 95 unsymmetrisch ausgebildete Materialansammlungen 102, so daß die Buchse 88 nur in einer einzigen Lage in den Deckel 87 einsetzbar ist. Andererseits ist der Deckel 87 mit eingelegter Buchse 88 so rotationssymmetrisch zur Längsachse des Steuerschiebers 13 ausgebildet, daß er in zwei, zueinander um 180° verdrehten Einbaulagen, am Gehäuse 11 montierbar ist.

Die Figur 3 zeigt die in den Flansch 91 eingelegte Rundschnurdichtung 94, die im wesentlichen aus zwei konzentrisch zueinander liegenden, im wesentlichen kreisförmigen Schnurringen 103 und 104 besteht, die durch vier radial verlaufende Schnurstege 105 bis 108 sowie einem dazwischenliegenden Flachsteg 109 voneinander in Abstand gehalten werden und bei welcher der innere Schnurring 103 in einem dem Flachsteg 109 diametral gegenüberliegendem Bereich zur Steuerung einer Entlüftung unterbrochen ist. Am Flansch 91 sind diametral gegenüberliegend mit dem Flachsteg 109 zusammenwirkende Erhebungen 111 ausgebildet, so daß die ringförmige Rundschnurdichtung 94 nur seitenrichtig in die Rillen 93 eingelegt werden kann. Die Lage der diametral einander gegenüberliegenden Schnurstege 105 und 107 ist so gewählt, daß sie in jeder Montagelage in der Stirnfläche 15 zwischen den Bogennuten 42 und 46 bzw. 44 und 47 zu liegen kommen, während die Nut 107 die betreffende Dichtstelle überbrückt. Fernerhin ist die Rundschnurdichtung 94 so groß ausgebildet, daß der innere Schnurring 103 gerade den Außendurchmesser der Buchse 88 umspannt. Der Abstand zwischen den Schnurringen 103 und 104 ist so groß gewählt, daß die auf dem gleichen Durchmesser liegenden Öffnungen und Bogennuten sowohl in der Stirnseite 15 wie auch im Flansch 91 der Buchse 88 in der jeweils gewünschten Weise voneinander abgedichtet oder miteinander verbunden wird. Außerdem ist die Rundschnurdichtung 94 insoweit rotationssymmetrisch ausgebildet, daß sie aus der in Figur 3 gezeichneten Lage um 180° gedreht in die Rillen 93 des Flansches 91 einlegbar ist, wobei der Flachsteg 91 oben zu liegen kommt.

Die rechte Deckeleinheit 18 besteht aus denselben Teilen wie die linke Deckeleinheit 16, nämlich aus dem äußeren Deckel 87 aus Druckguß, der inneren Buchse 88 aus Kunststoff, dem darin angeordneten Arbeitskolben 89 sowie der ringförmigen Rundschnurdichtung 94. Wie Figur 6 näher zeigt, ist der Deckel 87 mit Buchse 88 um 180° verdreht in einer zweiten Einbaulage montiert, während die Rundschnurdichtung 94 dieselbe Lage wie in Figur 3 beibehält.

Die Wirkungsweise des Wegeventiles 10 wird wie folgt erläutert: Wie aus Figur 2 hervorgeht, arbeitet das Wegeventil 10 als ein Impulsventil mit gleichen Kolbenflächen an den Arbeitskolben 89. Soll der Steuerschieber 13 aus der in Figur 1 gezeichneten, linken Stellung nach rechts bewegt werden, so wird in den ersten Steueranschluß 26 ein Druckluftimpuls eingegeben. Dieser gelangt durch die dritte Längsbohrung 45 in die dritte Bogennut 46, die von der ringförmigen Rundschnurdichtung 94 in der linken Stirnfläche 15 dicht umschlossen ist und unmittelbar über den Steuerkanal 96 in der Buchse 88 in den Druckraum 97. Die Druckluft schiebt den Arbeitskolben 89 in der ersten Deckeleinheit 16 zusammen mit dem Steuerschieber 13 nach rechts. Ein hinter dem Arbeitskolben 89 liegender, an den Steuerschieber 13 grenzender Ringraum 112 ist hierbei über die oben liegende Längsnut 99, die Unterbrechung in dem inneren Schnurring 103 der ringförmigen Rundschnurdichtung 94, die nierenförmige Öffnung 48 in der linken Stirnfläche 15 und die Entlüftungs-Öffnung 49 zur Außenluft entlastet. Bei dieser Rechtsbewegung des Steuerschiebers 13 wird vom Arbeitskolben 89 in der zweiten Decksleinheit 18 über die entsprechende Verbindung (56, 55, 99) Außenluft in einen entsprechenden Ringraum 113 nachgesaugt. Zugleich ist der Druckraum 97 in der zweiten Deckeleinheit 18 über den Steuerkanal 96 in der Buchse 88 und die in der Stirnfläche 17 verlaufende, von der Rundschnurdichtung 94 abgedichtete sechste Bogennut 54 zur sechsten Längsbohrung 53 und zum zweiten Steueranschluß 27 entlüftet. Bei einem Umsteuern des Steuerschiebers 13 aus einer rechten Endstellung in seine linke Endstellung wird in entsprechend umgekehrter Weise der Steuerimpuls in den zweiten Steueranschluß 27 gegeben, während der erste Steueranschluß 26 entlüftet ist. Der Steuerschieber 13 kann somit die üblichen Verbindungen eines 5/2-Wegeventils herstellen, wie dies Figur 2 vereinfacht zeigt.

Soll nun das Wegeventil 10 als Umschaltventil mit Luftrückstellung betrieben werden, wie dies in vereinfachter Darstellung Figur 14 zeigt, so bleibt am Gehäuse 11 die linke Deckeleinheit 16 unverändert, während anstelle der zweiten Deckeleinheit 18 nach Figur 1 eine zweite Deckeleinheit 114 nach Figur 15 verwendet wird. Die Deckeleinheit 114 unterscheidet sich von derjenigen nach Figur 1 vor allem dadurch, daß anstelle des Antriebskolbens 89 ein Distanzstück 115 in die Buchse 88 eingesetzt ist. Der Deckel 87, die Buchse 88 und die Rundschnurdichtung 94 bleiben unverändert, sind jedoch zusammen um 180° um ihre Längsachse gedreht an der rechten Stirnfläche 17 montiert. Dies ist aus Figur 16 im Vergleich zu Figur 6 näher erkennbar, in der nun die Rundschnurdichtung 94 mit ihrem Flachsteg 109 oben liegt, während der Steuerkanal 96 in der Buchse 88 unten zu liegen kommt. Auf diese Weise ist der Druckraum 97 in der zweiten Deckeleinheit 114 nun ständig mit dem Arbeitsanschluß 21 für die Zuluft verbunden. Im einzelnen gelangt die Zuluft vom Arbeitsanschluß 21 über die erste Bohrung 39 (siehe Figur 8) in die erste Quernut 37 und damit weiter über die T-förmige Kammer 78 der Rundschnurdichtung 63 in die Längsnut 31 der Steuerfläche 28, wie dies auch aus Figur 7 ersichtlich ist. Der hierbei auf den Längsschnursteg 77 wirkende Druck wird über den angeformten Sicherungsnocken 83, der in die zweite Vertiefung 69 der Steuerplatte 14 ragt, auf die Steuerplatte übertragen, so daß eine einwandfreie Abdichtung der Längsnut 31 und der ersten Quernut 37 gewährleistet ist. Von der ersten Längsnut 31 gelangt die Druckluft über eine offene Verbindung in dem Kanaldeckel 74 in die zweite Schrägnut 33 und weiter in die fünfte Längsbohrung 51. Wie Figur 5 näher zeigt, kann von dort die Druckluft in der fünften Bogennut 52 nach unten strömen, wo sie durch die Rundschnurdichtung 94 hindurch in den Steuerkanal 96 und weiter in den Druckraum 97 der zweiten Deckeleinheit 114 gelangt. Die Auslaßöffnung 55 ist durch einen Abschnitt des inneren Schnurringes 103 im Bereich des Flachsteges 109 vom Druckraum 97 getrennt. Die Zuluft in der Längsnut 31 gelangt zwar über den ersten Kanaldeckel 72, die erste Schrägnut 32, die zweite Längsbohrung 43 die zweite Bogennut 44, und die nierenförmige Nut 95 in der Buchse 88 weiter in die vierte Bogennut 47 in der Stirnfläche 15, wo sie im übrigen durch die ringförmige Rundschnurdichtung 94 blockiert ist. Der Steuerschieber 13 des Wegeventiles 10 wird somit von einem Druckimpuls im ersten Steueranschluß 26 nach rechts in seine Endlage bewegt, wobei er am Distanzstück 115 zur Anlage kommt. Zugleich wirkt als Rückstellkraft auf den Steuerschieber 13 der Druck vom Arbeitsanschluß 21 ständig im Druckraum 97 der zweiten Deckeleinheit 114 und damit auf den Steuerschieber 13.

Wird nun das Wegeventil 10 als Impulsventil mit Differenzkolben betrieben, so wie dies in Figur 17 vereinfacht dargestellt ist, so verbleibt an der linken Stirnfläche 15 die erste Deckeleinheit 16 während an der rechten Stirnfläche 17 die zweite Deckeleinheit 114 nach Figur 15 angeflanscht wird, wobei jedoch der Deckel 87 mit eingelegter Buchse 88 in Bezug auf Figur 16 um 180° zur Längsachse gedreht wird, die ringförmige Rundschnurdichtung 94 jedoch die in Figur 16 gezeichnete Lage beibehält, wie dies Figur 18 näher darstellt. Bei einer derartigen Montagelage von Buchse 88 und Rundschnurdichtung 94 wird die vom Arbeitsanschluß 21 für die Zuluft über die Kanäle der Steuerfläche 28 in die fünfte Bogennut 52 an der rechten Stirnfläche 17 gelangende Druckluft von der Rundschnurdichtung 94 blockiert, ebenso die nierenförmige Entlüftungs-Öffnung 55. Ein in den zweiten Steueranschluß 27 gegebener Impuls gelangt jedoch über die sechste Längsbohrung 53 in die sechste Bogennut 54 strömt dort in der rechten Stirnfläche 17 nach oben und gelangt über den Steuerkanal 96 in der Buchse 88 in den Druckraum 97 der zweiten Deckeleinheit 114. Der Steuerschieber 13 kann somit mittels Differenzkolben betrieben werden.

Wird nun das Wegeventil 10 als Umschaltventil mit Federrückstellung betrieben, wie dies Figur 19 in vereinfachter Form zeigt, so verbleibt am Gehäuse 11 die erste Deckeleinheit 16, während an der rechten Stirnfläche 17 eine zweite Deckeleinheit 116 gemäß Figur 20 angeordnet wird. Die Deckeleinheit 116 unterscheidet sich von der zweiten Deckeleinheit 18 nach Figur 1 vor allem durch eine andere Buchse 117, an der lediglich der Boden 98 entfernt wurde, so daß die Buchse 117 eine Feder 118 mit einem zugeordneten Druckbolzen 119 für die Federrückstellung des Steuerschiebers 13 aufnehmen kann. Der Deckel 87 ist baugleich und so ausgebildet, daß die an ihm sich abstützende Feder 118 zentriert ist. Die Buchse 117 ist infolge ihrer gleichartigen Materialverdickungen 102 nur in einer bestimmten Lage in den Deckel 87 einsetzbar. Die Montagelage der Buchse 117 mit der eingelegten Rundschnurdichtung 94 zeigt Figur 21, wonach die Steuerluftverbindungen in der rechten Stirnfläche vergleichbar sind wie nach Figur 6. Der die Feder 118 aufnehmende Druckraum 97 wird über die Öffnungen 55 (Figur 5) und 56 entlüftet. Die Verbindung zum Anschluß 27 ist durch eine Kugel in Buchse 117 gesperrt. Der Steuerschieber 13 läßt sich somit durch einen Steuerimpuls im ersten Steueranschluß 26 gegen die Kraft der Feder 108 nach rechts auslenken, in eine Endstellung, aus der heraus die Feder 118 ihn bei fehlender Steuerluft in seine linke Endlage zurückführt.

Wird das Wegeventil 10 als Magnetventil mit Luftrückstellung betrieben, wie dies Figur 21' vereinfacht zeigt, so müssen gegenüber Figur 1 folgende Änderungen vorgenommen werden. In der ersten Deckeleinheit 16 wird die Buchse 88 gegenüber Figur 3 um 180° gedreht, während die Rundschnurdichtung 94 ihre in Figur 3 gezeichnete Lage beibehält. An der Steuerplatte 14 wird der Kanaldeckel 72 durch ein nicht näher gezeichnetes, an sich bekanntes 3/2-Magnetventil ersetzt. Gemäß der Funktion für Luftrückstellung des Steuerschiebers 13 wird an der rechten Stirnfläche 17 des Gehäuses 11 die zweite Deckeleinheit 114 nach Figur 15 bzw. 16 angebaut. Bei geöffnetem Magnetventil kann somit Druckluft von dem Arbeitsanschluß 21 über die T-förmige Kammer 78 der Rundschnurdichtung 63 in die Längsnut 31 gelangen und weiter über das geöffnete Magnetventil in die erste Schrägnut 32, die zweite Längsbohrung 43 und den Steuerkanal 96 in der Buchse 88 in den Druckraum 97.

Die Figur 23 zeigt eine Betriebsart des Wegeventiles 10 als Magnetventil mit Federrückstellung, wobei die erste Deckeleinheit 16 in der in Figur 22 dargestellten Art am Gehäuse angeordnet wird, während auf der gegenüberliegenden Stirnfläche 17 die zweite Deckeleinheit 116 nach Figur 20 in der in Figur 21 gezeichneten Art am Gehäuse 11 angebaut wird.

Die Figur 24 zeigt als weitere Betriebsart des Wegeventils 10 in vereinfachter Darstellung ein Magnetimpulsventil, bei dem ausgehend von Figur 1 folgende Änderungen erforderlich sind: Die beiden Kanaldeckel 72 und 74 auf der Steuerplatte 14 müssen durch jeweils ein 3/2-Magnetventil ersetzt werden. An der linken Stirnfläche 15 wird die erste Deckeleinheit 16 so angeflanscht, daß die Buchse 88 und die Rundschnurdichtung 94 die in Figur 22 gezeichneten Montagestellungen einnehmen. An der rechten Stirnfläche 17 wird die zweite Deckeleinheit 18 angebaut, wobei jedoch die Buchse 88 und die Rundschnurdichtung 94 die in Figur 3 gezeichneten Montagestellungen einnehmen. Bei einem derartigen Zusammenbau kann das Wegeventil 10 dann als Magnetimpulsventil betrieben werden.

Die Figur 25 zeigt einen Teilschnitt mach Figur 7, wobei jedoch die in der Steuerfläche 28 liegende Rundschnurdichtung 63 in einer anderen Lage montiert ist, um hierdurch eine Fremdluftversorgung der Steuerseite zu erhalten. Diese Lage wird dadurch erreicht, indem die Rundschnurdichtung 63 nach Figur 10 in der Zeichenebene um 180° um eine lotrechte Achse durch den Kreuzungspunkt der von der Dichtung 63 umschlossenen Balken gedreht wird und so in die Aufnahmefläche 62 der Steuerplatte 14 gelegt wird, wobei der Sicherungsnocken 83 in die erste Vertiefung 68 der Steuerplatte greift. Nach anschließender Montage der Steuerplatte mit eingelegter Rundschnurdichtung 63 auf der Steuerfläche 28 des Gehäuses 11, ist dann durch die T-förmige Kammer 78 der Rundschnurdichtung 63 die zweite Quernut 38 mit der Längsnut 31 verbunden, während die erste Quernut 37 blockiert ist. Wie Figur 25 deutlich zeigt, verhindert der Sicherungsnocken 63 auch in diesem Fall, daß der Längsschnursteg 77 bei Druck in der Längsnut 31 aus seiner Lage gedrückt werden kann, so daß auch bei einer Montageweise für Fremdluftversorgung eine sichere Abdichtung gewährleistet ist. Bei der Montage der Rundschnurdichtung 63 in der Steuerplatte 14 in der für Fremdluftversorgung geeigneten Stellung, lassen sich die in die entgegengesetzte Richtung weisenden äußeren Schenkel der Rundschnurdichtung 63 ohne weiteres umbiegen und in die Aufnahmefläche 62 einfügen. Bei der in Figur 25 gezeichneten Einbaulage der Rundschnurdichtung 63 ragt der Anzeigenocken 84 dann bei der Marke 86 für Fremdluftversorgung aus dem Gehäuse heraus, was jedoch in der für Eigenluftversorgung vorgesehenen Figur 4 nicht dargestellt ist.

## Patentansprüche

1. Wegeventil mit einem längsbeweglichen Steuerschieber (13) in einem Gehäuse (11), wobei die Impulse, welche den Steuerschieber (13) des Wegeventils betätigen, gemäß unterschiedlichen Betriebsarten zugeleitet werden können, wie z.B. Steuerfluidversorgung aus der internen Druckversorgung oder extern über einen getrennten Steueranschluß (26, 27),
- und bei dem das Gehäuse (11) Längskanäle (41, 43, 45, 51, 53) aufweist, welche in Stirnflächen (15, 17) des Gehäuses (11) führen,
- und die Stirnflächen (15, 17) von Deckeln abgedeckt sind, welche mehrere Deckelkanäle (95, 96, 99) aufweisen,
- und das Gehäuse (11) eine die Arbeitsanschlüsse (21 bis 25) aufweisende Grundfläche (19) hat, mit der es auf ein anderes Maschinenteil mit zugeordneten Druckmittel-Anschlüssen anflanschbar ist,
dadurch gekennzeichnet,
- daß am Gehäuse (11) auf der zur Grundfläche (19) entgegengesetzt liegenden Seite eine Steuerfläche (28) ausgebildet ist, an der eine Steuerplatte (14) anliegt,
- daß mindestens ein in die Stirnfläche (15) des Gehäuses (11) mündender Längskanal (43) mit einem Steuerkanal (29) Verbindung hat, der einen zur Steuerfläche (28) hin offenen, nutenförmigen Abschnitt (31) aufweist,
- daß in der Steuerfläche (28) eine der internen und eine der externen Steuerfluidversorgung zugeordnete Öffnungen (37, 38) in einer Ebene senkrecht zur Längsachse des Steuerschiebers (13) und diametral zum nutenförmigen Abschnitt (31) des Steuerkanals (29) angeordnet sind,
- daß die Abdichtung der Öffnungen (37, 38) und des nutenförmigen Abschnitts (31) eine zwischen Steuerfläche (28) und Steuerplatte (14) eingelegte Rundschnurdichtung (63) übernimmt,
- daß die Rundschnurdichtung (63) ein Dichtschnurteil (77) aufweist, das durch Montage der Rundschnurdichtung (63) in zwei unterschiedlichen Montagelagen die Schaltfunktion für interne oder externe Steuerfluidversorgung übernimmt,
- und daß am Dichtschnurteil (77) ein Sicherungsnocken (83) befestigt ist, der in beiden Montagelagen der Rundschnurdichtung (63) in zugeordnete Vertiefungen (68, 69) der Steuerplatte (14) greift.

2. Wegeventil nach Anspruch 1, dadurch gekennzeichnet, daß der Steuerkanal (29) mit seinem nutenförmigen Abschnitt (31) zwischen den Öffnungen (37, 38) mittig in der Steuerfläche (28) verläuft und mit seinen nach beiden Stirnflächen (15, 17) hin verlaufenden Enden (32, 33) so abgewinkelt ist, daß er in der Steuerfläche (28) im wesentlichen eine U-Form mit stark auseinander gebogenen Schenkeln aufweist.

3. Wegeventil nach Anspruch 2, dadurch gekennzeichnet, daß von den beiden Enden (32, 33) des Steuerkanals (29) koaxial zur Längsachse des Steuerschiebers (13) verlaufende Längskanäle (43, 51) in die Stirnflächen (15, 17) führen, deren Öffnungen auf dem gleichen Durchmesser und im gleichen Abstand von einer durch die Längsachse verlaufenden, lotrechten Ebene liegen.

4. Wegeventil nach Anspruch 1 oder 2, dadurch gekennzeichnet, daß der Steuerkanal (29) durch zwei Stege (34, 35) in den nutförmigen mittleren Abschnitt (31) und in zwei äußere Schrägnuten (32, 33) unterteilt ist und jedem Steg (34 35) in der Stirnfläche (28) ein Dichtschnursteg (75, 76) zugeordnet ist und daß die Steuerplatte (14) zwei den mittleren Abschnitt (31) mit jeweils einer äußeren Nut (32, 33) verbindende Kanalbrücken (64, 66, 71, 72; 65, 67, 73, 74) aufweist.

5. Wegeventil nach einem der Ansprüche 1 bis 4, dadurch gekennzeichnet, daß die Rundschnurdichtung (63) im wesentlichen die Form zweier sich mittig kreuzender Balken umschließt und zwei parallele Dichtschnurstege (75, 76) in einem geraden, mittleren Abschnitt des langen Balkens sowie ein Längsschnursteg (77) am Kreuzungspunkt der Balken eine T-förmige Kammer (78) begrenzen, an deren Querstabenden sich äußere, insbesondere abgewinkelt liegende Kammern (79, 84) im Bereich des langen Balkens angrenzen, während der Längsschnursteg mit dem angeformten Sicherungsnocken (83) eine vierte Kammer (82) im Bereich des kurzen Balkens begrenzt.

6. Wegeventil nach einem der Ansprüche 1 bis 5, dadurch gekennzeichnet, daß die Rundschnurdichtung (63) an einem der den Stirnseiten (17, 15) nächstliegenden Enden einen Anzeigenocken (84) aufweist, der aus der Dichtfläche zwischen Gehäuse (11) und Steuerplatte (14) herausragt.

7. Wegeventil nach einem der Ansprüche 1 bis 6, dadurch gekennzeichnet, daß die den Steuerkanal (29) bildenden Nuten (31, 32, 33) sowie die die Öffnungen bildenden Quernuten (37, 38) in einer ebenen Dichtungsfläche (36) liegen und daß in der Steuerplatte (14) eine gegenüber der Steuerfläche (28) zurückgesetzte, die Rundschnurdichtung (63), aufnehmende Aufnahmefläche (62) ausgebildet ist, in der im Bereich des kurzen Balkens die zwei den Sicherungsnocken (83) aufnehmenden Vertiefungen (68, 69) liegen.

8. Wegeventil nach Anspruch 7, dadurch gekennzeichnet, daß in der Aufnahmefläche (62) im Bereich des langen Balkens vier durch Stege voneinander getrennte Erhebungen (64, 66; 65, 67) liegen, von denen jeweils zwei über eine Kanalbrücke (71, 72; 73, 74) miteinander verbindbar sind.

## Claims

1. Directional control valve having a longitudinally moveable control spool (13) in a housing (11), with it being possible for the impulses which actuate the control spool (13) of the directional control valve to be delivered in accordance with different operating modes such as, for example, control fluid supply from the internal pressure supply or externally via a separate control connection (26, 27),

-and in which the housing (11) has longitudinal channels (41, 43, 45, 51, 53) which lead into end faces (15, 17) of the housing (11),

- and the end faces (15, 17) are covered by covers which have several cover channels (95, 96, 99),

- and the housing (11) has a base face (19) having the operating connections (21 to 25), with which base face (19) it can be flanged on to another machine part having allocated pressure medium connections,

characterized in that

- a control face (28) is made at the housing (11) on the side located opposite the base face (19), against which control face (28) sits a control plate (14),

- at least one longitudinal channel (43) opening into the end face (15) of the housing (11) is connected to a control channel (29) which has a groove-shaped portion (31) open towards the control face (28),

- in the control face (28), one of the openings (37, 38) allocated to the internal control fluid supply and one of the openings (37, 38) allocated to the external control fluid supply is arranged in a plane perpendicular to the longitudinal axis of the control spool (13) and diametrically to the groove-shaped portion (31) of the control channel (29),

-a toroidal seal (63) inserted between the control face (28) and the control plate (14) seals the openings (37, 38) and the groove-shaped portion (31),

- the toroidal seal (63) has a sealing cord part (77) which, by the installation of the toroidal seal (63) in two different installation positions, assumes the switching function for internal or external control fluid supply,

- and a safety lobe (83) is fixed on the sealing cord part (77), which safety lobe (83), in both installation positions of the toroidal seal (63), grips into allocated recesses (68, 69) of the control plate (14).

2. Directional control valve according to Claim 1, characterized in that the control channel (29), with its groove-shaped portion (31), runs centrally in the control face (28) between the openings (37, 38) and, with its ends (32, 33) which run towards both end faces (15, 17), is angled in such a way that, in the control face (28), it has essentially a U-shape having legs spread considerably far apart.

3. Directional control valve according to Claim 2, characterized in that longitudinal channels (43, 51) running coaxially to the longitudinal axis of the control spool (13) lead from both ends (32, 33) of the control channel (29) into the end faces (15, 17), the openings of which longitudinal channels (43, 51) are located on the same diameter and at the same distance from a perpendicular plane running through the longitudinal axis.

4. Directional control valve according to Claim 1 or 2, characterized in that the control channel (29) is sub-divided by two webs (34, 35) into the groove-shaped centre portion (31) and two outer slanting grooves (32, 33), and a sealing cord web (75, 76) is allocated to each web (34, 35) in the end face (28), and that the control plate (14) has two channel bridges (64, 66, 71, 72; 65, 67, 73, 74) connecting the centre portion (31) with in each case one outer groove (32, 33).

5. Directional control valve according to one of Claims 1 to 4, characterized in that the toroidal seal (63) essentially encloses the form of two centrally intersecting spars, and two parallel sealing cord webs (75,76), in a straight, centre portion of the long spar, and also a longitudinal cord web (77) at the intersection point of the spars, define a T-shaped chamber (78), at the transverse rod ends of which, in the area of the long spar, adjoin outer chambers (79, 81) located in particular in an angled configuration, while the longitudinal cord web, with the integrally formed safety lobe (83), defines a fourth chamber (82) in the area of the short spar.

6. Directional control valve according to one of Claims 1 to 5, characterized in that the toroidal seal (63), on one of the ends nearest to the end faces (17, 15), has an indicating lobe (84) which projects out of the sealing face between the housing (11) and the control plate (14).

7. Directional control valve according to one of Claims 1 to 6, characterized in that the grooves (31, 32, 33), forming the control channel (29), and also the transverse grooves (37, 38) forming the openings are located in a flat sealing face (36), and that a locating face (62) which is set back relative to the control face (28) and locates the toroidal seal (63) is made in the control plate (14), in which locating face (62), in the area of the short spar, are located the two recesses (68, 69) locating the safety lobe (83).

8. Directional control valve according to claim 7, characterized in that four elevations (64, 66; 65, 67) separated from one another by webs are located in the locating face in the area of the long spar, of which elevations (64, 66; 65, 67) in each case two can be connected to one another via a channel bridge (71, 72; 73, 74).

## Revendications

1.- Distributeur avec un tiroir de commande (13) se déplaçant longitudinalement dans un boîtier (11), les impulsions qui actionnent ce tiroir de commande (13) du distributeur, pouvant être acheminées selon différents modes de fonctionnement, tels que par exemple l'alimentation en fluide de commande à partir de l'alimentation interne en pression ou bien de l'alimentation externe par l'intermédiaire d'un raccordement de commande distinct (26, 27), distributeur dans lequel:

- le boîtier (11) comporte des canaux longitudinaux (41, 43, 45, 51, 53), qui aboutissent aux surfaces frontales (15, 17) du boîtier (11),

- ces surfaces frontales (15, 17) sont recouvertes par des couvercles qui comportent plusieurs canaux de couvercles (95, 96, 99),

- le boîtier (11) a une surface de base (19) comportant les raccordements fonctionnels (21 à 25), surface par laquelle il est susceptible d'être bridé sur une autre partie de machine comportant des raccordements correspondants de fluide sous pression,

distributeur caractérisé en ce que:

- sur la face du boîtier (11) opposée à la surface de base (19) est ménagée une surface de commande (28), sur laquelle s'applique une plaque de commande (14),

- au moins un canal longitudinal (43) débouchant sur la face frontale (15) du boîtier (11) est en communication avec un canal de commande (29) qui comporte une partie en forme de gorge (31) ouverte vers la surface de commande (28),

- sur la surface de commande (28) sont disposés un orifice associé à l'alimentation interne en fluide de commande et un orifice associé à l'alimentation externe en fluide de commande (37, 38) dans un plan perpendiculaire à l'axe longitudinal du tiroir de commande (13) en étant placés diamètralement par rapport à la partie en forme de gorge (31) du canal de commande (29),

- l'étanchement des orifices (37, 38) et de la partie en forme de gorge (31) est assuré par un joint d'étanchéité en cordon rond (63) inséré entre la surface de commande (28) et la plaque de commande (14),

- ce joint d'étanchéité en cordon rond (63) comporte une partie de cordon (77) qui, du fait du montage du joint d'étanchéité en cordon rond (63) dans deux positions de montage différentes, assure la fonction de commutation pour l'alimentation interne ou externe en fluide de commande,

- sur cette partie de cordon (77) est fixée une saillie d'arrêt (83) qui dans les deux positions de montage du joint d'étanchéité en cordon rond (63) vient en prise dans des cavités correspondantes (68, 69) de la plaque de commande (14).

2.- Distributeur selon la revendication 1, caractérisé en ce que la partie en forme de gorge (31) du canal de commande (29) s'étend dans le milieu de la surface de commande (28) entre les orifices (37, 38), et les extrémités (32, 33) du canal de commande s'étendant vers les deux faces frontales (15, 17) sont coudées de façon que ce canal de commande présente dans la surface de commande (28) essentiellement une forme en U avec des branches fortement écartées l'une de l'autre.

3.- Distributeur selon la revendication 2, caractérisé en ce que des canaux longitudinaux (43, 51) s'étendant à partir des deux extrémités (32, 33) du canal de commande (29) co-axialement par rapport à l'axe longitudinal des tiroirs de commande (13), aboutissent sur les faces frontales (15, 17) et leurs orifices se situent sur le même diamètre et à la même distance d'un plan vertical passant par l'axe longitudinal.

4.- Distributeur selon la revendication 1 ou 2, caractérisé en ce que le canal de commande (29) est subdivisé par deux traverses (34, 35) en la partie médiane en forme de gorge (31) et en deux gorges obliques extérieures (32, 33), une traverse (75, 76) du cordon d'étanchement étant associée à chaque traverse (34, 35) sur la surface de commande (28), et la plaque de commande (14) comportant deux ponts de canal (64, 66, 71, 72; 65, 67, 73, 74) reliant la partie médiane (31) avec respectivement une gorge extérieure (32, 33).

5.- Distributeur selon une des revendications 1 à 4, caractérisé en ce que le joint d'étanchéité en cordon rond (63) délimite essentiellement la forme de deux barres se croisant dans le milieu, et deux traverses parallèles (75, 76) du cordon d'étanchement dans une partie médiane rectiligne de la barre la plus longue, ainsi qu'une traverse (77) de cordon longitudinal au point de croisement des barres, délimitent une chambre en forme de T (78), tandis qu'aux extrémités de la barre de ce T, se raccordent, dans la zone de la barre la plus longue, des chambres extérieures (79, 81) coudées, tandis que la traverse du cordon longitudinal avec la saillie d'arrêt (83) formée sur elle, délimite une quatrième chambre (82) au voisinage de la barre la plus courte.

6.- Distributeur selon une des revendications 1 à 5, caractérisé en ce que le joint d'étanchéité en cordon rond (63) comporte à l'une de ses extrémités les plus proches des faces frontales (17, 15) une saillie de signalisation (84) qui s'étend à l'extérieur de la surface d'étanchement entre le boîtier (11) et la plaque de commande (14).

7.- Distributeur selon une des revendications 1 à 6, caractérisé en ce que les gorges (31, 32, 33) constituant le canal de commande (29) ainsi que les gorges transversales constituant les orifices (37, 38) se situent dans une surface d'étanchement plane (36), tandis que dans la plaque de commande (14) une surface réceptrice (62) en retrait par rapport à la surface de commande (28) et recevant le joint d'étanchéité en cordon rond (63), est ménagée, surface réceptrice dans laquelle au voisinage de la barre la plus courte, se situent les deux cavités (68, 69) recevant la saillie d'arrêt (83).

8.- Distributeur selon la revendication 7, caractérisé en ce que dans la surface réceptrice (62), au voisinage de la barre la plus longue, se trouvent quatre saillies (64, 66; 65, 67) séparées les unes des autres par des traverses, respectivement deux de ces saillies étant susceptibles d'être reliées par l'intermédiaire d'un pont de canal (71, 72; 73, 74).

0 093 359

Fig.1

Fig.2

Fig.3

Fig.4

Fig.5

Fig.6

Fig.7

0 093 359

Fig.8

Fig.12

Fig.9

Fig.10

Fig.11

Fig.13

Fig.14

Fig.15

Fig.16

0 093 359

Fig.17

Fig.19

Fig.18

Fig.20

Fig.21

Fig.21'

Fig.23

Fig.24

Fig.22

Fig.25